# EUROPÄISCHE PATENTSCHRIFT

(11) **EP 1 124 076 B1**
(45) Veröffentlichungstag und Bekanntmachung des Hinweises auf die Patenterteilung: **16.08.2006**
(21) Anmeldenummer: 01101202.8
(22) Anmeldetag: 19.01.2001
(51) Int. Cl.: F16F 1/38, F16F 1/371, F16C 33/22, B60G 21/055, B60G 11/20, B60G 7/00

(54) **Gelenklager, insbesondere Stabilisatorlager für ein Fahrzeug**
Pivot bearing, particularly stabiliser bearing for a vehicle
Palier de pivotement, en particulier palier pour une barre stabilisatrice d' un véhicule

(30) Priorität: 12.02.2000 DE 10006329
(43) Veröffentlichungstag der Anmeldung: 16.08.2001
(73) Patentinhaber: Jörn ELZA GmbH, 71336 Waiblingen (DE)
(72) Erfinder: Zawadzki, Bernd, 71397 Leutenbach (DE); Schwaiger, Franz, 80997 München (DE); Stummer, Josef, 85716 Unterschleissheim (DE); Winkler, Tino, 85748 Garching (DE)
(74) Vertreter: Neubauer, Hans-Jürgen

(56) Entgegenhaltungen:
- EP-A- 0 864 773
- DE-A1- 2 160 022
- DE-C1- 4 413 666
- DE-C1- 19 746 357
- US-A- 5 290 018
- PATENT ABSTRACTS OF JAPAN Bd. 1997, Nr. 01, 31. Januar 1997 (1997-01-31) -& JP 08 244431 A (TOKAI RUBBER IND LTD), 24. September 1996 (1996-09-24)
- PATENT ABSTRACTS OF JAPAN Bd. 1999, Nr. 08, 30. Juni 1999 (1999-06-30) & JP 11 082625 A (TOYODA GOSEI CO LTD), 26. März 1999 (1999-03-26)
- PATENT ABSTRACTS OF JAPAN Bd. 1995, Nr. 07, 31. August 1995 (1995-08-31) -& JP 07 091473 A (KINUGAWA RUBBER IND CO LTD), 4. April 1995 (1995-04-04)
- PATENT ABSTRACTS OF JAPAN Bd. 017, Nr. 397 (M-1452), 26. Juli 1993 (1993-07-26) -& JP 05 077632 A (NISSAN MOTOR CO LTD), 30. März 1993 (1993-03-30)

## Beschreibung

Die Erfindung betrifft ein Gelenklager, insbesondere ein Stabilisatorlager für ein Fahrzeug nach dem Oberbegriff des Anspruchs 1.

Ein gattungsgemäßes Gelenklager als Stabilisatorlager für ein Fahrzeug ist aus der DE 197 46 357 C1 bekannt. Dieses Gelenklager umfasst ein äußeres Lagerteil aus einem zweiteiligen, zu einem Aufnahmeauge zusammenspannbaren Lagergehäuse. Ein erstes Gehäuseteil besteht aus einem Jochteil mit zwei Jochschenkeln und einem Jochbogen mit in etwa halbzylinderförmiger Innenwand, während ein zweites Gehäuseteil als plane Abstützwand aus einem Tragstrukturteil, insbesondere aus einem Fahrzeugstrukturteil, besteht.

Ferner umfasst das Gelenklager ein inneres zylindrisches Lagerteil, insbesondere einen Stabilisatorstab, welches vom Lagergehäuse umfassbar ist. Weiter ist eine das innere zylindrische Lagerteil umgebende und im Lagergehäuse unter Vorspannung einspannbare Elastomerbuchse vorgesehen, die wenigstens einen Längsschlitz aufweist und mittels Aufspreizen radial auf das innere zylindrische Lagerteil aufsteckbar ist.

Im Raum zwischen der planen Abstützwand und der Elastomerbuchse ist ein Raumfüllkörper als Stützelement eingesetzt, der vor dem Zusammenspannen des Lagergehäuses aus dem Jochteilbereich um einen Vorspann-Überstand herausragt und der beim Zusammenspannen des Lagergehäuses unter Verkleinerung des Vorspann-Überstands in den Jochteilbereich unter Aufbau einer Vorspannung in der Elastomerbuchse einpressbar ist.

Konkret ist hier die Elastomerbuchse durch zwei Gummihalbschalen gebildet, von denen eine erste, obere Gummihalbschale im Bereich des Jochbogens eingelegt ist, während eine zweite, untere Gummihalbschale über ein Gummi-Filmscharnier an einem ersten der beiden Jochschenkel angelenkt ist. Um einen Stabilisator in der Elastomerbuchse festzulegen, wird die untere Gummihalbschale nach Einführen des Stabilisators nach oben in Richtung oberer Gummihalbschale geklappt, wobei am zweiten Jochschenkel eine Rastnase angebracht ist, um die untere Gummihalbschale im nach oben geklappten Zustand festzulegen. Dazu wirkt die Rastnase mit einer Randkante des an das freie Gummihalbschalenende anvulkanisierten Raumfüllkörpers zusammen. Somit sind hier im montierten Zustand des Gelenklagers an den Anlagebereichen der Gummihalbschalenenden zwei gegenüberliegende Längsschlitze ausgebildet.

Nachteilig bei einem derartigen Aufbau mit zwei Längsschlitzen ist, dass zwei Schwachstellen im Gummimaterial ausgebildet sind, die die Dauerhaltbarkeit des Gelenklagers reduzieren können, insbesondere wenn sie in Hauptbelastungsrichtung liegen.

Desweiteren handelt es sich hierbei um einen insgesamt komplizierten und aufwendigen Aufbau. So erfordert insbesondere die Herstellung des Gummi-Filmscharniers am ersten Jochschenkel und die Herstellung der Rastnase am zweiten Jochschenkel einen unerwünscht großen fertigungstechnischen Aufwand, was die Kosten insgesamt erhöht.

Weiter wird hier die Vorspannung im Gummimaterial im wesentlichen nur in der Verspannrichtung aufgebracht, wodurch ungleichmäßige Spannungsverteilungen entstehen können mit der Folge einer reduzierten Dauerhaltbarkeit.

Insgesamt handelt es sich hierbei somit um einen aufwendigen, komplizierten und kostenintensiven Gelenklageraufbau, bei dem die Dauerhaltbarkeit ggf. erheblich reduziert sein kann.

Es ist daher Aufgabe der Erfindung ein Gelenklager, insbesondere ein Stabilisatorlager für ein Fahrzeug, zu schaffen, das einfach und preiswert herzustellen und zu montieren ist und das zudem eine hohe Dauerhaltbarkeit aufweist.

Diese Aufgabe wird gelöst mit den Merkmalen des Anspruchs 1.

Gemäß Anspruch 1 ist nur ein einziger Längsschlitz in der Elastomerbuchse vorgesehen, der im Endmontagezustand in einer mittleren Jochlängsebene auf die Abstützwand zu gerichtet liegt. Weiter sind zwei Raumfüllkörper vorgesehen, die sich zu beiden Seiten des Längsschlitzes anschließen und dabei in einem insgesamt in etwa halbzylinderförmigen Bereich formschlüssig an der Elastomerbuchse angehaftet sind. Zur Ausfüllung des Raumes zwischen der Elastomerbuchse, den Jochschenkeln und der Abstützwand liegen Abstützflächen der Raumfüllkörper an der Abstützwand und Seitenflächen der Raumfüllkörper an den Innenseiten der Jochschenkel an.

Ein derartiger Aufbau mit einem einzigen Längsschlitz ist insgesamt einfach und damit kostengünstig herzustellen, wobei durch den lediglich einen Längsschlitz zudem vorteilhaft erreicht wird, dass nur eine einzige mögliche Schwachstelle im Elastomermaterial ausgebildet wird. Damit kann im Elastomerbereich ein erwünschter gleichmäßiger Spannungsverlauf erreicht werden, was wiederum zu einer vorteilhaft erhöhten Dauerhaltbarkeit und damit zu hohen Standzeiten des Gelenklagers insgesamt führt.

Dieser Längsschlitz liegt zudem besonders vorteilhaft in einer mittleren Jochlängsebene und ist auf die Abstützwand, z. B. ein Fahrzeugstrukturteil, zu gerichtet, so dass der einzige Längsschlitz im endmontierten Zustand in etwa 90° versetzt zu einer Hauptbelastungsrichtung angeordnet werden kann. Auch dadurch wird vorteilhaft erreicht, dass im Elastomermaterial ein gleichmäßiger Spannungsverlauf erreichbar ist, was wiederum die Dauerhaltbarkeit erhöht.

Desweiteren wird mit einem derartigen Aufbau auch eine Montagevereinfachung sowohl bei der Vormontage als auch bei der Endmontage erreicht. So kann das Gelenklager im Rahmen der Vormontage hier lediglich unter elastischer Aufweitung des Längsschlitzes auf z. B. den Stabilisator aufgesteckt werden und ist dadurch unverlierbar auf diesem gehalten. Im Rahmen der Endmontage braucht das Gelenklager dann z. B. hinsichtlich der Abstützwand nur noch entsprechend ausgerichtet und befestigt werden.

In einer besonders bevorzugten Ausführungsform nach Anspruch 2 ist die mittlere Jochlängsebene eine Symmetrieebene, wobei im Endmontagezustand die beiden Raumfüllkörper hier mit einem Toleranzausgleichs-Spalt einander gegenüberliegen. Ein derartiger Toleranzausgleichs-Spalt ist insbesondere bei geschmiedeten oder gegossenen, das heißt unbearbeiteten Gehäusen von Vorteil. Zudem lässt sich hiermit vorteilhaft eine evt. Überbestimmung eines Presssitzes vorteilhaft vermeiden. Durch den symmetrischen Aufbau können Gleichteile verwendet werden, die hinsichtlich deren Einbaulage unabhängig sind, z. B. hinsichtlich einer 180°-Verdrehung. Damit ist bei der Montage eine richtige Positionierung einfach möglich. Insgesamt lässt sich hier somit die Herstellung und Montage wesentlich vereinfachen.

Gemäß Anspruch 3 ist vorgesehen, dass sich die Innenseiten der Jochschenkel ausgehend vom jochbogenseitigen Halbzylinderbereich konusförmig zur Abstützwand hin erweitern und die Raumfüllkörper in diesem Bereich eine entsprechend konusförmig angepasste Gestalt aufweisen. Dies ist insbesondere in Verbindung mit der Montage vorteilhaft, da hierdurch Einführ- und Einpressschrägen ausgebildet werden. Diese Einführ- und Einpressschrägen bewirken weiterhin vorteilhaft, dass damit ein gleichmäßiger Vorspannungsaufbau erreicht werden kann.

Grundsätzlich können die Raumfüllkörper aus jedem geeigneten, inkompressiblen Material hergestellt werden. In einer nach Anspruch 4 besonders bevorzugten Ausführungsform sind die Raumfüllkörper aus Kunststoff und/oder Leichtmetall hergestellt. Derartige aus Kunststoff und/oder Leichtmetall hergestellte Raumfüllkörper sind stabil, korrosionsfest und leicht, was vorteilhaft für die Lebensdauer des Gelenklager insgesamt ist und zudem einen gewichtsgünstigen Aufbau ermöglicht. Desweiteren sind Raumfüllkörper aus einem derartigen Material einfach und kostengünstig herstellbar. Zudem können derartige Raumfüllkörper einfach an die Elastomerbuchse angehaftet, insbesondere anvulkanisiert, werden. Außerdem ist mit derartigen Werkstoffen vorteilhaft eine wenigstens teilweise Toleranzaufnahme für eine formschlüssige Anlage durch eine geringe Verformung der Raumfüllkörper-Anlageflächen in unbearbeiteten Gehäusen möglich.

Weiter ist nach Anspruch 5 vorgesehen, dass der Radius des jochbogenseitigen Halbzylinderbereichs kleiner ist als im Herstellzustand der Radius des zugeordneten Elastomerbuchsenbereichs, so dass beim Zusammenspannen zumindest ein Teil der Vorspannung in diesem Elastomerbuchsenbereich durch eine Radiusverkleinerung erhalten wird. Dadurch kann im Elastomermaterial eine gleichmäßige radiale Vorspannung aufgebracht werden, was zu einem erwünschten gleichmäßigen Spannungsverlauf bei Belastungen führt. Dies trägt wiederum dazu bei, ein Gelenklager mit hohen Standzeiten zu schaffen.

In einer besonders vorteilhaften Ausführungsform ist nach Anspruch 6 vorgesehen, dass der jochbogenseitige Halbzylinderbereich und der raumfüllkörperseitige Halbzylinderbereich der Elastomerbuchse im Herstellzustand gegeneinander durch eine Exzentrizität versetzt sind. Dadurch, dass die Vorspannung im Elastomermaterial im Wesentlichen in Zusammenspannrichtung aufgebaut wird, kann durch die Exzentrizität in Verbindung mit den Zylinderformen eine ungleichmäßige Elastomerverdrängung berücksichtigt werden, so dass im Endmontagezustand möglichst gleichmäßige Vorspannungsverhältnisse vorliegen.

Nach Anspruch 7 ist in der Elastomerbuchse wenigstens ein zylindrisches, am Längsspalt längsgeteiltes Zwischenblech enthalten. Ein derartiges Zwischenblech ist an sich bekannt und bewirkt einen gleichmäßigen Spannungsverlauf. Desweiteren ist hierdurch eine Einstellung bzw. eine Optimierung der Federkonstanten möglich, zum Beispiel je nach der Einbausituation hinsichtlich der Vermeidung lokaler Überbelastungen.

Ein einfache Befestigung und Vorspannung ergibt sich mit den Merkmalen des Anspruchs 8, gemäß denen in den Jochschenkeln auf die Abstützwand gerichtete Bohrungen zur Aufnahme von Spannschrauben enthalten sind, die in zugeordnete Gewindebohrungen der Abstützwand einschraubbar sind.

Desweiteren ist gemäß Anspruch 9 vorgesehen, in den axialen Seitenbereichen des jochbogenförmigen Halbzylinderbereichs radial vorspringende, axial wirkende Stützschultern vorzusehen. Damit wird insbesondere eine Sicherung gegen ein axiales Auswandern der Elastomerbuchse bei Betriebsbelastungen bewirkt.

Gemäß Anspruch 10 ist vorgesehen, dass ausgehend vom Anlagebereich an der Abstützwand an den Innenseiten der Jochschenkel zum Jochbogen gerichtet wenigstens eine Aufnahmenut für einen entsprechend zugeordneten am jeweiligen Raumfüllkörper angeformten Axialsicherungssteg aufweist. Auch hierdurch ergibt sich wiederum eine vorteilhafte Sicherung gegen Auswandern bei Betriebsbelastungen.

Die Erfindung wird nachfolgend anhand einer Zeichnung näher erläutert.

Es zeigen:
- Fig. 1: einen schematischen Querschnitt durch ein Jochteil,
- Fig. 2: eine schematische Schnittansicht entlang der Linie A-A der Fig. 1,
- Fig. 3: eine schematische Darstellung einer Elastomerbuchse mit daran angehafteten Raumfüllkörpern,
- Fig. 4: eine schematische Schnittdarstellung entlang der Linie C-C der Fig. 3,
- Fig. 5: eine schematische Querschnittsansicht durch ein fertig montiertes Gelenklager im vorgespannten Zustand, und
- Fig. 6: eine schematische Schnittansicht entlang der Linie D-D der Fig. 5.

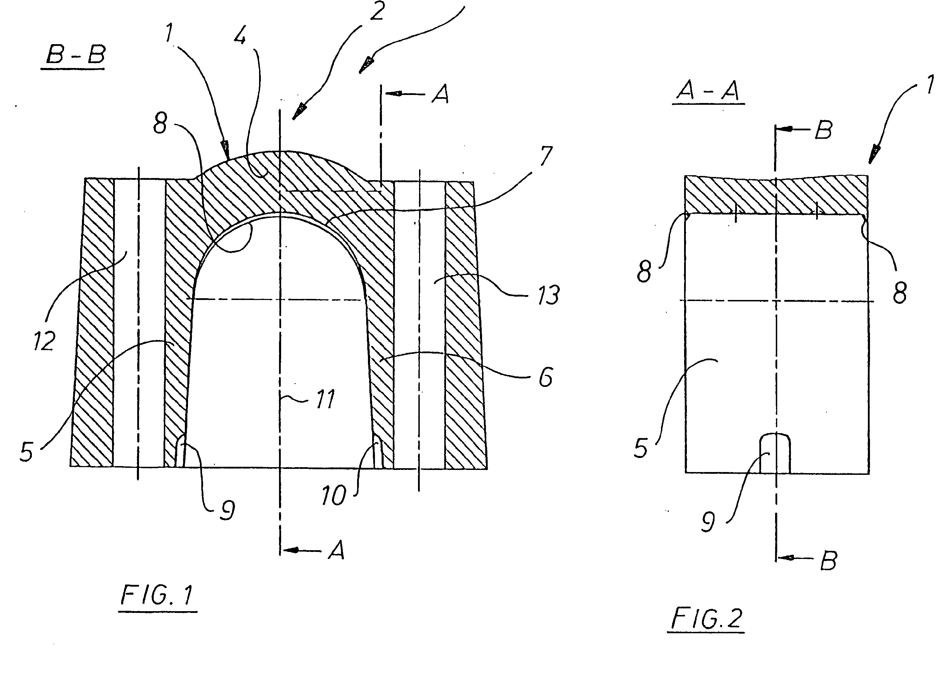

In der Fig. 1 ist schematisch im Querschnitt ein Jochteil 1 als Bestandteil eines Lagergehäuses 2 für ein Gelenklager 3 dargestellt, deren mittlere Jochlängsebene hier als Symmetrieebene 11 ausgebildet ist. Das Jochteil 1 umfasst einen Jochbogen 4 mit einem ersten Jochschenkel 5 und einem zweiten Jochschenkel 6, wobei der Jochbogen 4 eine in etwa halbzylinderförmige Innenwand 7 aufweist.

Wie dies aus der Fig. 1 weiter ersichtlich ist, erweitern sich die Innenseiten der Jochschenkel 5, 6 ausgehend vom jochbogenseitigen Halbzylinderbereich konusförmig nach unten.

Der Fig. 1 in Verbindung mit der Fig. 2, die einen schematischen Querschnitt durch das Jochteil 1 entlang der Linie A-A der Fig. 1 zeigt, kann entnommen werden, dass in den axialen Seitenbereichen des jochbogenförmigen Halbzylinderbereichs radial vorspringende und axial wirkende Stützschultern 8 ausgebildet sind, die im fertig montierten Zustand des Gelenklagers 3 bei Betriebsbelastungen ein axiales Auswandern verhindern.

Aus den Fig. 1 und 2 ist weiter ersichtlich, dass an den Innenseiten der Jochschenkel 5, 6 zum Jochbogen 4 gerichtet jeweils eine Aufnahmenut 9, 10 ausgebildet ist.

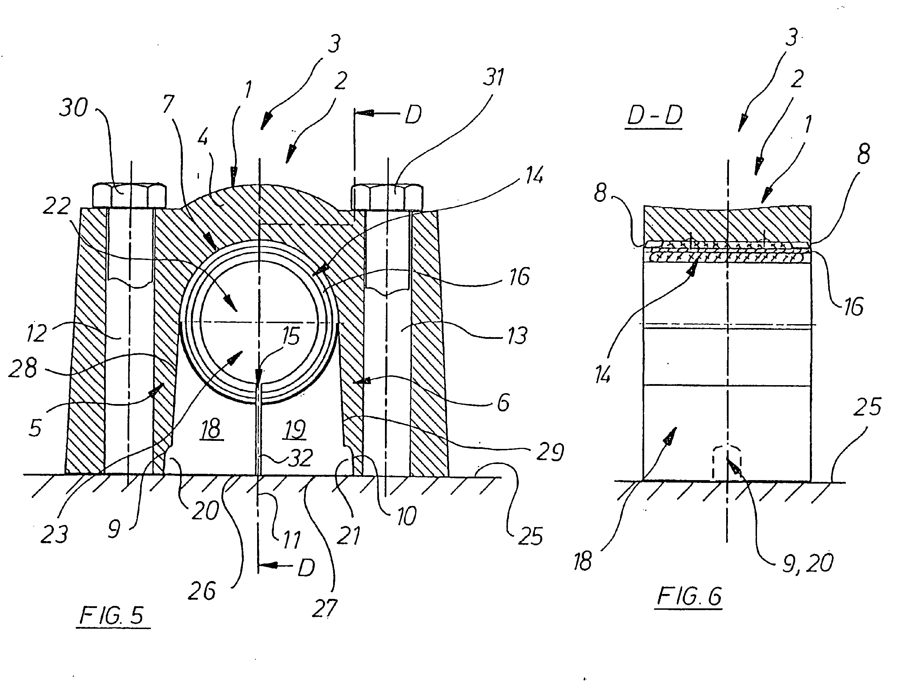

Ferner sind, wie dies insbesondere aus der Fig. 1 ersichtlich ist, in den Jochschenkeln 5, 6 Bohrungen 12, 13 zur Aufnahme von lediglich in der Fig. 5 dargestellten Spannschrauben 30, 31 enthalten.

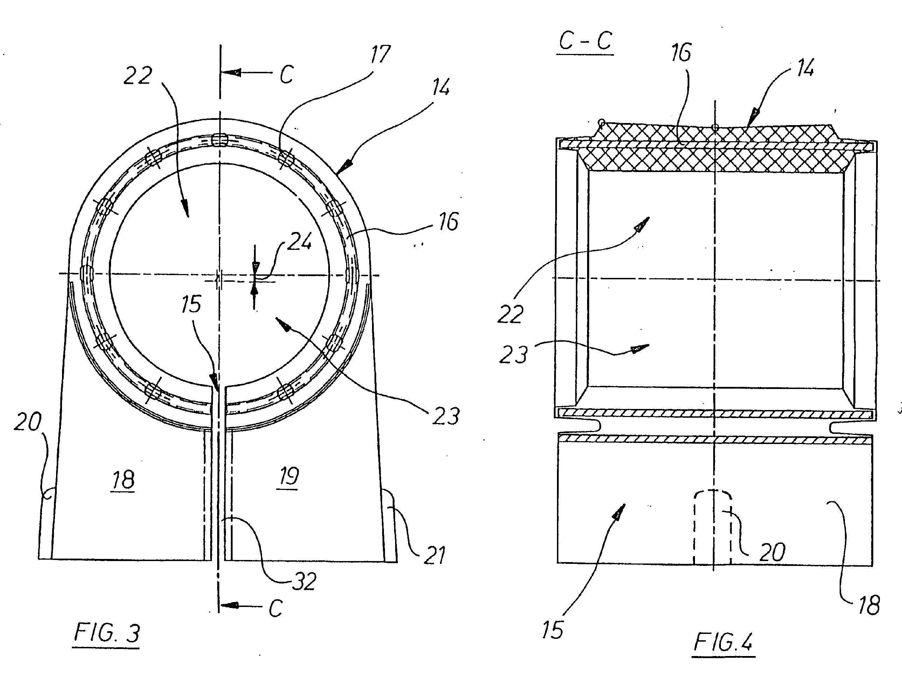

In der Fig. 3 ist eine schematische Darstellung einer Elastomerbuchse 14 gezeigt, die einen Längsschlitz 15 aufweist, der im in der Fig. 5 dargestellten endmontierten Zustand der Elastomerbuchse 14 im Jochteil 1 in der als Symmetrieebene 11 ausgebildeten mittleren Jochlängsebene liegt und nach unten gerichtet auf eine Abstützwand 25 zu, d.h. nicht in die horizontale Hauptbelastungsrichtung, gerichtet ist.

In der Elastomerbuchse 14 ist, wie dies insbesondere aus der Fig. 4 ersichtlich ist, die einen Schnitt entlang der Linie C-C der Fig. 3 zeigt, ein zylindrisches, am Längsschlitz 15 längsgeteiltes Zwischenblech 16 enthalten.

Wie dies aus der Fig. 3 weiter ersichtlich ist, weist die Elastomerbuchse 14 umfangsseitig eine Reihe von Werkzeugansätzen 17 zum Entformen der Elastomerbuchse 14 auf.

Der Fig. 3 kann weiter entnommen werden, dass sich zu beiden Seiten des Längsschlitzes 15 zwei Raumfüllkörper 18, 19 aus Kunststoff und/oder Leichtmetall anschließen, die in einem insgesamt in etwa halbzylinderförmigen Bereich jeweils formschlüssig an die Elastomerbuchse 14 anvulkanisiert sind.

Wie dies in den Fig. 3 und 4 weiter dargestellt ist, sind an den Raumfüllkörpern 18, 19 jeweils axial Sicherungsstege 20, 21 angeformt, die entsprechend den am ersten und zweiten Jochschenkel 5, 6 ausgebildeten Aufnahmenuten 9, 10 zugeordnet sind.

Aus der Fig. 3 ist weiter ersichtlich, dass der jochbogenseitige Halbzylinderbereich 22 und der raumfüllkörperseitige Halbzylinderbereich 23 der Elastomerbuchse 14 im hier gezeigten Herstellzustand gegeneinander durch eine Exzentrizität 24 versetzt sind. Damit kann eine ungleichmäßige Elastomerverdrängung berücksichtigt werden, was nachfolgend noch näher erläutert wird.

Die Elastomerbuchse 14 ist, wie dies in der Fig. 3 dargestellt ist, u.a. aus fertigungs- und einbautechnischen Gründen im Übergangsbereich vom jochbogenseitigen Halbzylinderbereich 22 zum raumfüllkörperseitigen Halbzylinderbereich 23 vorteilhaft an der Außenseite abgeflacht, wobei die Abflachung in die konische Raumfüllkörperaußenkontur übergeht.

Der Fig. 4 kann zudem entnommen werden, dass die Elastomerbuchse 14 an einem im jochbogenseitigen Halbzylinderbereich 22 liegenden oberen Außenbereich von außen nach innen leicht konisch abfällt. Dadurch wird vorteilhaft erreicht, dass in diesem Bereich im montierten Zustand ein Raum zur Verfügung gestellt wird, in den sich das Elastomermaterial, vorzugsweise ein Gummimaterial, verdrücken kann.

In der Fig. 5 ist die Elastomerbuchse 14 mitsamt den Raumfüllkörpern 18, 19 im fertig montierten, vorgespannten Zustand gezeigt. In der Fig. 5 ist hierzu das Jochteil 1 der das zweite Gehäuseteil bildenden, planen Abstützwand 25 zugeordnet, die durch ein Tragstrukturteil, vorzugsweise ein Fahrzeugstrukturteil gebildet ist, was hier allerdings lediglich schematisch dargestellt ist.

Der Radius des Jochbogens 4 ist kleiner als der Radius des jochbogenseitigen Halbzylinderbereichs 22 der Elastomerbuchse 14, so dass beim Zusammenspannen zumindest ein Teil der Vorspannung in diesem Elastomerbuchsenbereich durch eine Radiusverkleinerung erhalten wird. Im fertig montierten Zustand liegen Abstützflächen 26, 27 der Raumfüllkörper 18, 19 an der Abstützwand 25 und Seitenflächen 28, 29 der Raumfüllkörper 18, 19 an den Innenseiten der Jochschenkel 5, 6 an, so dass der Raum zwischen der Elastomerbuchse 14, den Jochschenkeln 5, 6 und der Abstützwand 25 vollständig ausgefüllt ist. Durch die in der Fig. 3 gezeigte Exzentrizität 24 der Elastomerbuchse 14 wird dabei erreicht, dass ungleichmäßige Elastomerverdrängungen berücksichtigt werden können, so dass im hier in der Fig. 5 gezeigten Endmontagezustand möglichst gleichmäßige Vorspannungsverhältnisse gegeben sind.

Die Axialsicherungsstege 20, 21 greifen dabei in die Aufnahmenuten 9, 10 ein, so dass hierdurch eine Sicherung gegen ein axiales Auswandern gegeben ist. Ebenso ist hier eine Sicherung gegen ein axiales Auswandern der Elastomerbuchse 14 durch die Stützschultern 8 gegeben.

Im noch nicht endmontierten Zustand, der hier allerdings nicht dargestellt ist, ragen dabei die Raumfüllkörper 18, 19 mit einem Verspann-Überstand aus dem Jochteil 1 heraus, so dass beim Festlegen des Jochteils 1 an der Abstützwand 25 über die hier lediglich schematisch dargestellten Spannschrauben 30, 31 auch eine Vorspannung durch Verkleinerung des Vorspann-Überstandes in der Elastomerbuchse 14 aufgebracht werden kann. Dabei ist durch einen Toleranzausgleichsspalt 32 zwischen den beiden Raumfüllkörpern 18, 19 ein Toleranzausgleich möglich, was insbesondere bei geschmiedeten oder gegossenen, unbearbeiteten Gehäusen von Vorteil ist.

In der Fig. 6 ist schließlich ein schematischer Schnitt gezeigt, der in etwa den Schnittverlauf entlang der Linie D-D der Fig. 5 zeigt, aus dem insbesondere der Aufbau des Elastomermaterials in Verbindung mit dem Zwischenblech 16 ersichtlich ist.

## Patentansprüche

1. Gelenklager, insbesondere Stabilisatorlager für ein Fahrzeug
mit einem äußeren Lagerteil aus einem zweiteiligen, zu einem Aufnahmeauge zusammenspannbaren Lagergehäuse, wobei ein erstes Gehäuseteil aus einem Jochteil mit zwei Jochschenkeln und einem Jochbogen mit etwa halbzylinderförmiger Innenwand besteht und ein zweites Gehäuseteil als plane Abstützwand aus einem Tragstrukturteil, insbesondere aus einem Fahrzeugstrukturteil, besteht,
mit einem inneren zylindrischen Lagerteil, insbesondere einem Stabilisatorstab, welches vom Lagergehäuse umfassbar ist,
mit einer das innere zylindrische Lagerteil umgebenden und im Lagergehäuse unter Vorspannung einspannbaren Elastomerbuchse, die wenigstens einen Längsschlitz aufweist und mittels Aufspreizen radial auf das innere zylindrische Lagerteil aufsteckbar ist, und
mit einem im Raum zwischen der planen Abstützwand und der Elastomerbuchse eingesetzten Raumfüllkörper als Stützelement, das vor dem Zusammenspannen des Lagergehäuses aus dem Jochteilbereich um einen Verspann-Überstand herausragt und beim Zusammenspannen des Lagergehäuses unter Verkleinerung des Verspann-Überstands in den Jochteilbereich unter Aufbau einer Vorspannung in der Elastomerbuchse einpressbar ist,
**dadurch gekennzeichnet,**
**dass** nur ein einziger Längsschlitz (15) in der Elastomerbuchse (14) vorgesehen ist, der im Endmontagezustand in einer mittleren Jochlängsebene (11) auf die Abstützwand (25) zu gerichtet liegt,
**dass** zwei Raumfüllkörper (18, 19) vorgesehen sind, die sich zu beiden Seiten des Längsschlitzes (15) anschließen und dabei in einem insgesamt etwa halbzylinderförmigen Bereich formschlüssig an der Elastomerbuchse (14) angehaftet sind, und
**dass** zur Ausfüllung des Raumes zwischen der Elastomerbuchse (14), den Jochschenkeln (5, 6) und der Abstützwand (25) Abstützflächen (26, 27) der Raumfüllkörper (18, 19) an der Abstützwand (25) und Seitenflächen (28, 29) der Raumfüllkörper (18, 19) an den Innenseiten der Jochschenkel (5, 6) anliegen.

2. Gelenklager nach Anspruch 1, **dadurch gekennzeichnet,**
**dass** die mittlere Jochlängsebene eine Symmetrieebene (11) ist, und
**dass** im Endmontagezustand die beiden Raumfüllkörper (18, 19) hier mit einem Toleranzausgleichs-Spalt (32) gegenüberliegen.

3. Gelenklager nach Anspruch 1 oder 2, **dadurch gekennzeichnet, dass** sich die Innenseiten der Jochschenkel (5, 6) ausgehend vom jochbogenseitigen Halbzylinderbereich konusförmig zur Abstützwand (25) hin erweitern und die Raumfüllkörper (18, 19) in diesem Bereich eine entsprechend konusförmig angepasste Gestalt aufweisen.

4. Gelenklager nach einem der Ansprüche 1 bis 3, **dadurch gekennzeichnet, dass** die Raumfüllkörper (18, 19) aus Kunststoff und/oder Leichtmetall hergestellt sind.

5. Gelenklager nach einem der Ansprüche 1 bis 4, **dadurch gekennzeichnet, dass** der Radius des jochbogenseitigen Halbzylinderbereichs kleiner ist als im Herstellzustand der Radius des zugeordneten Elastomerbuchsenbereichs, so dass beim Zusammenspannen zumindest ein Teil der Vorspannung in diesem Elastomerbuchsenbereich durch eine Radiusverkleinerung erhalten wird.

6. Gelenklager nach einem der Ansprüche 1 bis 5, **dadurch gekennzeichnet, dass** der jochbogenseitige Halbzylinderbereich und der raumfüllkörperseitige Halbzylinderbereich der Elastomerbuchse (14) im Herstellzustand gegeneinander durch eine Exzentrizität (24) versetzt sind.

7. Gelenklager nach einem der Ansprüche 1 bis 6, **dadurch gekennzeichnet, dass** in der Elastomerbuchse (14) wenigstens ein zylindrisches, am Längsspalt (15) längsgeteiltes Zwischenblech (16) enthalten ist.

8. Gelenklager nach einem der Ansprüche 1 bis 7, **dadurch gekennzeichnet, dass** in den Jochschenkeln (5, 6) auf die Abstützwand (25) gerichtete Bohrungen (12, 13) zur Aufnahme von Spannschrauben (30, 31) enthalten sind, die in zugeordnete Gewindebohrungen der Abstützwand (25) einschraubbar sind.

9. Gelenklager nach einem der Ansprüche 1 bis 8, **dadurch gekennzeichnet, dass** in den axialen Seitenbereichen des jochbogenförmigen Halbzylinderbereichs des Jochbogens (4) radial vorspringende, axial wirkende Stützschultern (8) vorgesehen sind.

10. Gelenklager nach einem der Ansprüche 1 bis 9, **dadurch gekennzeichnet, dass** ausgehend vom Anlagebereich an der Abstützwand (25) an den Innenseiten der Jochschenkel (5, 6) zum Jochbogen (4) gerichtet wenigstens eine Aufnahmenut (9, 10) für einen zugeordneten am jeweiligen Raumfüllkörper (18, 19) angeformten Axialsicherungssteg (20, 21) aufweist.

## Claims

1. Pivot bearing, in particular a stabilizer bearing for a vehicle
having an outer bearing part comprising a two-part bearing housing that can be clamped to a mounting eye, a first housing part comprising a yoke part having two yoke legs and a yoke arch having an approximately semi-cylindrical inside wall, and a second housing part in the form of a plane support wall comprising a supporting structural part, in particular a vehicle structural part,
having an inner cylindrical bearing part, in particular a stabilizer bar, which can be gripped by the bearing housing,
having an elastomer bushing enclosing the inner cylindrical bearing part and capable of being clamped under preloading in the bearing housing, the bushing having at least one longitudinal slot and being radially attachable by expansion onto the inner cylindrical bearing part, and
having a spatial filling element in the form of a supporting element inserted in the space between the plane support wall and the elastomer bushing, the element prior to clamping of the bearing housing protruding from the yoke part area by a bracing projection and when the bearing housing is clamped being capable of being pressed into the yoke part area, reducing the bracing projection and building up a preloading in the elastomer bushing,
**characterized in that**
only one single longitudinal slot (15) is provided in the elastomer bushing (14), which in the finally assembled state lies in a yoke central longitudinal plane (11) directed towards the support wall (25)
that two spatial filling elements (18, 19) are provided, which adjoin one another on both sides of the longitudinal slot (15) and are at the same time in an area of approximately semi-cylindrical overall shape positively attached to the elastomer bushing (14), and
that to fill in the space between the elastomer bushing (14), the yoke legs (5, 6) and the support wall (25) supporting faces (26, 27) of the spatial filling elements (18, 19) rest against the support wall (25) and lateral faces (28, 29) of the spatial filling elements (18, 19) on the insides of the yoke legs (5, 6).

2. Pivot bearing according to Claim 1, **characterized in that**
the yoke central longitudinal plane is a plane of symmetry (11), and
that in the finally assembled state the two spatial filling elements (18, 19) here lie opposite one another with a tolerance compensating gap (32).

3. Pivot bearing according to Claim 1 or 2, **characterized in that** the insides of the yoke legs (5, 6) widen conically outwards from the yoke arch-side semi-cylindrical area towards the support wall (25) and the spatial filling elements (18, 19) have a correspondingly matching conical design shape in this area.

4. Pivot bearing according to any one of Claims 1 to 3, **characterized in that** the spatial filling elements (18, 19) are made from plastics and/or lightweight metal.

5. Pivot bearing according to any one of Claims 1 to 4, **characterized in that** the radius of the yoke arch-side semi-cylindrical area is smaller than the radius of the assigned elastomer bushing in the manufactured state, so that when clamping together at least a proportion of the preloading in this elastomer bushing area is obtained through a radial reduction.

6. Pivot bearing according to any one of Claims 1 to 5, **characterized in that** the yoke arch-side semi-cylindrical area and the semi-cylindrical area of the elastomer bushing (14) on the spatial filling element side are in the manufactured state offset in relation to one another by an eccentricity (24).

7. Pivot bearing according to any one of Claims 1 to 6, **characterized in that** at least one cylindrical intermediate plate (16), longitudinally divided at the longitudinal gap (15), is contained in the elastomer bushing (14).

8. Pivot bearing according to any one of Claims 1 to 7, **characterized in that** holes (12, 13), oriented towards the support wall (25) and intended to receive clamping bolts (30, 31) are contained in the yoke legs (5, 6), the bolts being screwed into assigned threaded holes in the support wall (25).

9. Pivot bearing according to any one of Claims 1 to 8, **characterized in that** radially protruding, axially acting support shoulders (8) are provided in the axial side areas of the yoke arch-shaped semi-cylindrical area of the yoke arch (4).

10. Pivot bearing according to any one of Claims 1 to 9, **characterized in that** from the bearing area on the support wall (25) on the insides of the yoke legs (5, 6) facing the yoke arch (4) the leg has at least one receiving groove (9, 10) for an assigned axial securing web (20, 21) formed on the respective spatial filling element (18, 19).

## Revendications

1. Palier de pivotement, en particulier palier de stabilisateur pour un véhicule
avec une pièce de palier externe en une boîte de palier en deux parties comprimables ensemble en un oeillet de réception, une première pièce de boîtier étant constituée d'une pièce de joug avec deux branches de joug et un arc de joug avec une paroi interne à peu près semi-cylindrique, et une deuxième pièce de boîtier constituée sous forme de paroi d'appui plane à partir d'une pièce de structure porteuse, en particulier d'une pièce de structure de véhicule,
avec une pièce de palier cylindrique interne, en particulier une barre stabilisatrice, laquelle peut être comprise par le boîtier de palier,
avec un manchon en élastomère entourant la pièce de palier cylindrique interne et pouvant être encastré sous précontrainte dans le boîtier de palier, qui présente au moins une fente longitudinale et qui peut être emboîté radialement sur la pièce de palier cylindrique interne au moyen d'écarteurs,
et avec un corps d'encombrement spatial comme élément d'appui inséré dans l'espace entre la paroi d'appui plane et le manchon en élastomère, qui fait saillie depuis la zone de la pièce de joug autour d'une projection - gauchissement avant la tension du boîtier de palier et qui peut être comprimé lors de la tension du boîtier de palier en réduisant la projection - gauchissement dans la zone de la pièce de joug par la formation d'une précontrainte dans le manchon en élastomère,
**caractérisé en ce**
**qu'**une seule fente longitudinale (15) est prévue dans le manchon en élastomère (14), laquelle repose en direction de la paroi d'appui (25) à un niveau central de la longueur du joug (11) dans l'état de montage final,
**que** deux corps d'encombrement spatial (18, 19) sont prévus qui se raccordent sur les deux côtés de la fente longitudinale (15) et adhèrent ainsi de manière mécanique sur le manchon en élastomère (14) dans une zone, dans l'ensemble, à peu près semi-cylindrique, et
**que** pour remplir l'espace entre le manchon en élastomère (14), les branches de joug (5, 6) et la paroi d'appui (25), des surfaces d'appui (26, 27) des corps d'encombrement spatial (18, 19) reposent sur la paroi d'appui (25) et des surfaces latérales (28, 29) des corps d'encombrement spatial (18, 19) reposent sur les côtés internes des branches de travée (5, 6).

2. Palier de pivotement selon la revendication 1, **caractérisé en ce**
**que** le niveau central de la longueur de travée est un plan de symétrie (11)
et **que** dans l'état de montage final, les deux corps d'encombrement spatial (18, 19) reposent ici l'un sur l'autre avec une fente d'équilibrage de tolérance (32).

3. Palier de pivotement selon la revendication 1 ou 2, **caractérisé en ce que** les côtés internes des branches de joug (5, 6) en partant de la zone semi-cylindrique côté arc de joug s'étendent en forme de cône vers la paroi d'appui (25) et que les corps d'encombrement spatial (18, 19) présentent dans cette zone une forme adaptée en forme de cône correspondante.

4. Palier de pivotement selon l'une quelconque des revendications 1 à 3, **caractérisé en ce que** les corps d'encombrement spatial (18, 19) sont fabriqués en plastique et/ou en métal léger.

5. Palier de pivotement selon l'une quelconque des revendications 1 à 4, **caractérisé en ce que** le rayon de la zone semi-cylindrique côté arc de joug est inférieur au rayon de la zone du manchon en élastomère attribuée dans son état de fabrication, de façon à ce que lors de la contrainte, au moins une partie de la précontrainte soit maintenue dans cette zone du manchon en élastomère par une réduction de rayon.

6. Palier de pivotement selon l'une quelconque des revendications 1 à 5, **caractérisé en ce que** la zone semi-cylindrique côté arc de joug et la zone semi-cylindrique côté corps d'encombrement du manchon en élastomère (14) sont décalées l'une contre l'autre par une excentricité (24) dans l'état de fabrication.

7. Palier de pivotement selon l'une quelconque des revendications 1 à 6, **caractérisé en ce que** dans le manchon en élastomère (14), au moins une tôle intermédiaire (16) cylindrique séparée dans la longueur sur la fente longitudinale (15), est contenue.

8. Palier de pivotement selon l'une quelconque des revendications 1 à 7, **caractérisé en ce que** dans les branches de joug (5, 6), des perçages (12, 13) dirigés sur la paroi d'appui (25) sont contenus pour recevoir des vis de serrage (30, 31) qui peuvent être vissées dans des perçages filetés attribués de la paroi d'appui (25).

9. Palier de pivotement selon l'une quelconque des revendications 1 à 8, **caractérisé en ce que** dans les zones latérales axiales de la zone semi-cylindrique ayant la forme d'un arc de travée de l'arc de travée (4) des épaulements d'appui (8) radialement en projection et agissant axialement, sont prévus.

10. Palier de pivotement selon l'une quelconque des revendications 1 à 9, **caractérisé en ce qu'**en partant de la zone de positionnement sur la paroi d'appui (25) sur les côtés internes des branches de joug (5, 6) en direction de l'arc de joug (4), au moins une gorge de réception (9, 10) est présente pour une traverse de sûreté axiale (20, 21) formée, attribué sur chaque corps d'encombrement spatial (18, 19).
